# EUROPEAN PATENT APPLICATION

(11) **EP 3 764 304 A1**
(43) Date of publication of application: **13.01.2021**
(21) Application number: 20185072.4
(22) Date of filing: 09.07.2020
(51) Int. Cl.: G06Q 30/02, G06K 9/00

(54) **SYSTEM AND METHOD FOR ASSESSING QUALITY OF MEDIA FILES**

(30) Priority: 11.07.2019 US 201962872756 P
(71) Applicant: Promo.com Ltd., Tortola (VG)
(72) Inventor: MORE, Tom, 6998806 Tel Aviv (IL); AZATCHI, Yariv, 4437607 Kfar Saba (IL); Garfunkel Pony, Tamar, 5320021 Givatayim (IL)
(74) Representative: Pearl Cohen Zedek Latzer Baratz UK LLP

(57) **Abstract**

A system and method for assessing quality of a received media file may include extracting from the media file a feature; identifying at least one parameter of the feature; calculating a score for the parameter; assigning a weight to the feature; calculating a weighted score for the media file; and determining a quality of the media file based on the calculated weighted score.

## Description

### CROSS-REFERENCE TO RELATED APPLICATIONS

This application claims benefit of US Provisional Patent Application No. 62/872,756, entitled "System and method for assessing quality of media files", filed July 11, 2019, all of which is incorporated in its entirety herein by reference.

### FIELD OF THE INVENTION

The present invention relates to data analysis of media files. More particularly, the present invention relates to systems and methods for performing assessment of the quality of media files.

### BACKGROUND OF THE INVENTION

In recent years, videos are becoming the leading media form to publish content on social channels (e.g., "Facebook", "Instagram", "YouTube", etc.). Such publication of videos can be for private purposes as well as for marketing purposes, for instance, as part of a marketing campaign on social media. In some studies, it has been shown to be the most effective medium to promote a business, through organic and/or paid campaigns.

An increasing number of organizations are using such videos to try and market their business'. However, as the threshold for running video-based campaigns is getting lower, the required user's skill level for creating these videos and understanding how these videos are performing gets lower as well. Therefore, typically non-professional users are creating videos that lack the artistic and marketing knowhow to truly succeed in their marketing efforts.

Today, business owners usually hire a professional marketer (e.g., work with an agency) to create and manage their campaigns which can become a burden on costs. Another option is to create the campaign on their own, either by using a dedicated software or an online service, and thereby try and manage the campaigns themselves, which is very time consuming and, in many cases, yields poor results due to bad video creatives and wrong campaign management. Therefore, another solution is required.

### SUMMARY OF THE INVENTION

A method of assessing quality of a received media file may include extracting, by a processor, from the media file at least one feature of the received media file; identifying, by a processor, at least one parameter of each extracted feature; calculating, by the processor, a score for each identified parameter, wherein the score is calculated based on a predefined criterion; assigning, by the processor, a weight for each extracted feature; calculating, by the processor, a weighted score of the received media file; and determining, by the processor, the quality of the received media file based on the calculated weighted score.

A system or method may publish a received media file; aggregate the number of interactions with the published media file; and determine a performance success rate for the media file. A system or method may train a machine learning algorithm to determine changes in the received media file in order to increase the performance success rate of the received media file. A system or method may train a machine learning algorithm to determine the quality of the received media file.

Determining a quality of the received media file may be carried out in real time. Determining a quality of the received media file may be based on at least one of readability and design of the received media file. Determining a quality of the received media file may be based on at least one of: text color, number of different text colors, number of text styles, color contrast, font size, length of text, alignment of text, visibility of objects, transparency of predefined text, and time duration of the media file.

A processor may parse a received media file to identify the at least one parameter. A processor may identify in a media file, a set of features; assign a weight to each feature; identify a set of parameters related to features in the set of features; calculate a score for each identified parameter; calculate a weighted score for the media file based on weights of features and based on scores of parameters; and determine a quality value, rate or measure of the received media file based on the weighted score. Other aspects and/or advantages of the present invention are described herein.

### BRIEF DESCRIPTION OF THE DRAWINGS

The subject matter regarded as the present invention is particularly pointed out and distinctly claimed in the concluding portion of the specification. The invention, however, both as to organization and method of operation, together with objects, features, and advantages thereof, may best be understood by reference to the following detailed description when read in conjunction with the accompanying drawings in which:
Fig. 1 shows a block diagram of an exemplary computing device, according to some embodiments of the invention;
Fig. 2A shows a block diagram of a system for quality assessment of a received media file, according to some embodiments of the invention;
Fig. 2B shows a block diagram of a system for generation of media files, according to some embodiments of the invention;
Fig. 2C shows a table of parameters, scores weights for calculation of a quality of a media file, according to some embodiments of the invention;
Fig. 3 shows an example of a media file analytics dashboard as displayed to the user, according to some embodiments of the invention; and
Fig. 4 shows a flowchart of a method of assessing the quality of a received media file, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof can occur or be performed simultaneously, at the same point in time, or concurrently.

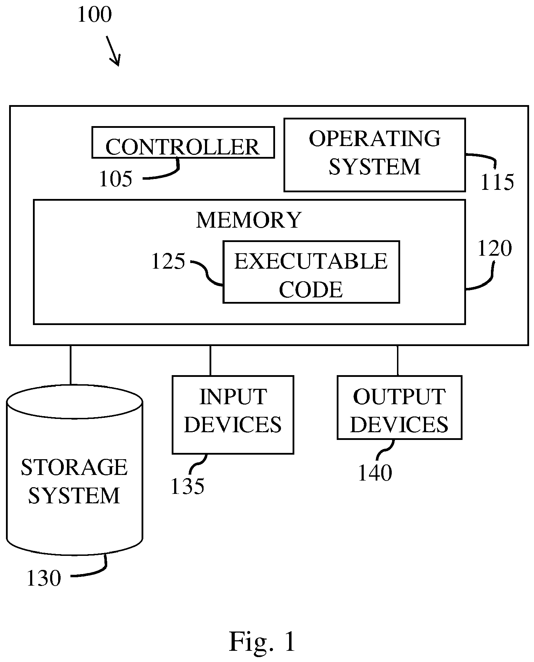

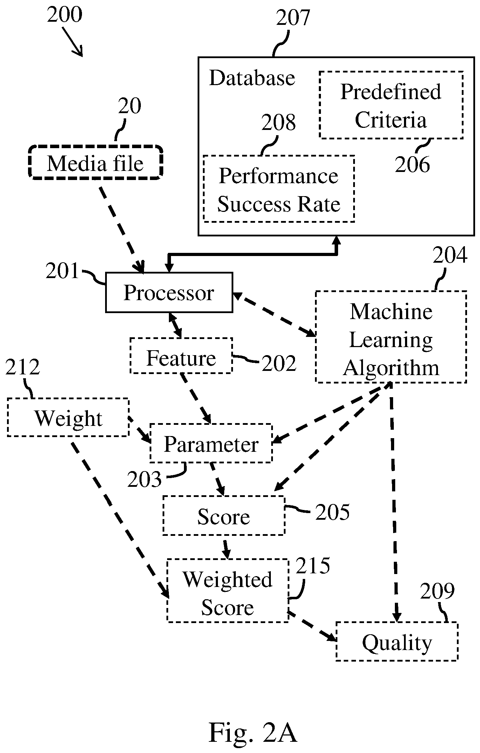

Reference is made to Fig. 1, which shows a block diagram of an exemplary computing device, according to some embodiments of the invention. A device 100 may include a controller 105 that may be, for example, a central processing unit processor (CPU), a chip or any suitable computing or computational device, an operating system 115, a memory 120, executable code 125, a storage system 130 that may include input devices 135 and output devices 140. Controller 105 (or one or more controllers or processors, possibly across multiple units or devices) may be configured to carry out methods described herein, and/or to execute or act as the various modules, units, devices, etc. More than one computing device 100 may be included in, and one or more computing devices 100 may act as the components of, a system according to embodiments of the invention. The computing device or controller of Fig. 1 may act as the various computing devices or controllers of Figs. 2A-2B, e.g. the devices communicating on a network, such as a processor receiving a media file for assessment.

Operating system 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or tasks or enabling software programs or other modules or units to communicate. Operating system 115 may be a commercial operating system. It will be noted that an operating system 115 may be an optional component, e.g., in some embodiments, a system may include a computing device that does not require or include an operating system 115. For example, a computer system may be, or may include, a microcontroller, an application specific circuit (ASIC), a field programmable array (FPGA) and/or system on a chip (SOC) that may be used without an operating system.

Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of, possibly different memory units. Memory 120 may be a computer or processor non-transitory readable medium, or a computer non-transitory storage medium, e.g., a RAM.

Executable code 125 may be any executable code, e.g., an application, a program, a process, task or script. Executable code 125 may be executed by controller 105 possibly under control of operating system 115. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein, or act as the "devices" described herein, or perform other functions.

Storage system 130 may be or may include, for example, a flash memory as known in the art, a memory that is internal to, or embedded in, a micro controller or chip as known in the art, a hard disk drive, a CD-Recordable (CD-R) drive, a Blu-ray disk (BD), a universal serial bus (USB) device or other suitable removable and/or fixed storage unit. Content may be stored in storage system 130 and may be loaded from storage system 130 into memory 120 where it may be processed by controller 105. In some embodiments, some of the components shown in Fig. 1 may be omitted. For example, memory 120 may be a non-volatile memory having the storage capacity of storage system 130. Accordingly, although shown as a separate component, storage system 130 may be embedded or included in memory 120.

Input devices 135 may be or may include any suitable input devices, components or systems, e.g., a detachable keyboard or keypad, a mouse and the like. Output devices 140 may include one or more (possibly detachable) displays or monitors, speakers and/or any other suitable output devices. Any applicable input/output (I/O) devices may be connected to computing device 100 as shown by blocks 135 and 140. For example, a wired or wireless network interface card (NIC), a universal serial bus (USB) device or external hard drive may be included in input devices 135 and/or output devices 140. It will be recognized that any suitable number of input devices 135 and output device 140 may be operatively connected to computing device 100 as shown by blocks 135 and 140. For example, input devices 135 and output devices 140 may be used by a technician or engineer in order to connect to a computing device 100, update software and the like. Input and/or output devices or components 135 and 140 may be adapted to interface or communicate.

Embodiments of the invention may include an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, cause the processor to carry out methods disclosed herein. For example, a storage medium such as memory 120, may include computer-executable instructions such as executable code 125 and a controller such as controller 105 may execute these instructions or executable code 125.

The storage medium may include, but is not limited to, any type of disk including magneto-optical disks, semiconductor devices such as read-only memories (ROMs), random access memories (RAMs), such as a dynamic RAM (DRAM), erasable programmable read-only memories (EPROMs), flash memories, electrically erasable programmable read-only memories (EEPROMs), magnetic or optical cards, or any type of media suitable for storing electronic instructions, including programmable storage devices.

Embodiments of the invention may include components such as, but not limited to, a plurality of central processing units (CPU) or any other suitable multi-purpose or specific processors or controllers (e.g., controllers similar to controller 105), a plurality of input units, a plurality of output units, a plurality of memory units, and a plurality of storage units. A system may additionally include other suitable hardware components and/or software components. In some embodiments, a system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

In some embodiments, a system may include or may be, for example, a plurality of components that include a respective plurality of central processing units, e.g., a plurality of CPUs as described, a plurality of chips, FPGAs or SOCs, a plurality of computer or network devices, or any other suitable computing device. For example, a system as described herein may include one or more devices such as the computing device 100.

Embodiments provide systems and methods for assessment of the quality of media files (e.g., video) to enable non-professional users, for instance business owners, to publish and/or launch successful campaigns by improving the creativity of the media files using machine learning tools. For example, an organization may launch an improved video based digital marketing campaign. Embodiments may also provide systems and methods to receive feedback on the performance of published media.

Reference is made to Fig. 2A which shows a block diagram of a system 200 for quality assessment of a received media file 20, according to some embodiments of the invention. The direction of arrows in Fig. 2A may indicate the direction of information flow. In some embodiments, software elements in Fig. 2A are indicated with a dashed line while hardware elements are with a solid line.

The system 200 may include a processor 201 (e.g., such as controller 105 shown in Fig. 1) to receive at least one media file 20 (e.g., a video file, or an audio file) for processing, and to extract from the received media file 20 at least one feature 202. The extracted feature 202 may be later used to assess the quality of the received media file 20. For example, the extracted feature 202 may include captions (e.g., from an image/video or captured from an audio file), a logo, animations, objects, etc. It should be noted that while a single media file 20 is shown in Fig. 2A, the same process may similarly apply for a plurality of media files.

In some embodiments, the processor 201 may identify at least one parameter 203 of each extracted feature 202. The identified parameter 203 may include at least one of: text color, number of different text colors (e.g., of captions), number of text styles, color contrast, font size, length of text, alignment of text, visibility of objects (e.g., of a logo), transparency of predefined text, and time duration. In some embodiments, the processor 201 may apply at least one machine learning algorithm 204 to identify the parameter 203, for instance identify transparency of a predefined text in a running video segment.

In some embodiments, the processor 201 may assign a weight 212 for each extracted feature 202 and/or for each identified parameter 203. For example, a weight of 0.3 may be assigned to text color while a weight of 0.6 may be assigned to logo visibility. In some embodiments, all extracted features 202 and/or identified parameters 203 may be assigned the same weight 212.

According to some embodiments, the processor 201 may calculate a score 205 for each identified parameter 203, where the score 205 may be calculated based on a predefined criterion 206. The calculated score 205 may be an initial indication for assessing the quality of the received media file 20. To calculate the score 205, the processor 201 may determine a value for each identified parameter 203 based on the corresponding predefined criterion 206. For instance, if the identified parameter 203 includes length of text (e.g., for extracted text feature 202) the corresponding predefined criterion 206 may be that the length of the text should be below ten words.

In some embodiments, the processor 201 may be coupled to a database 207 that may store a value for a performance success rate 208 and/or store the at least one predefined criterion 206. Once a new media file 20 is received, the processor 201 may calculate a new score 205 to determine the quality of the received media file 20 based on values stored at the database 207.

In some embodiments, the assigned weights 212 of each extracted feature 202 may be associated with the performance success rate 208 of published media files 20. In some embodiments, the database 207 may store the weights 212 corresponding to each extracted feature 202 and/or for each identified parameter 203.

In some embodiments, the processor 201 may calculate a weighted score 215 of the received media file, for instance based on the calculated score 205 and the assigned weight 212. The weighted score 215 may provide a further indication for assessing the quality of the received media file 20.

Generally, a weighted score may be calculated by taking a parameter value and modifying the value based on a weight of the relevant feature (the feature which the parameter describes, characterizes or is related to). For example, if the feature is "Text" then text size may be a parameter where the value of the parameter is the font size. Remaining with the text example, a weight of the "Text" feature may be 0.82 and a score for text size may be in the range of one to ten (1-10), e.g., based on how different (or far) the font size in the video is from an optimal font size. Assuming an embodiment assigns the score of 8.5 to the font size in a video, a weighted score for the text size may be calculated by multiplying the score with the weight of the relevant feature, e.g., the weight of the "Text" feature may be multiplied by the score of text size (as in 0.82*8.5=6.97). A weighted score of a video may be the sum, aggregation or any other function of the scores of all parameters and the weights of the features in the video.

According to some embodiments, the processor 201 may determine a value for the quality 209 of the received media file 20 based on the calculated weighted score 215, for instance a low weighted score 215 may correspond to a low quality. In some embodiments, the quality 209 of the received media file 20 may be determined by the at least one machine learning algorithm 204.

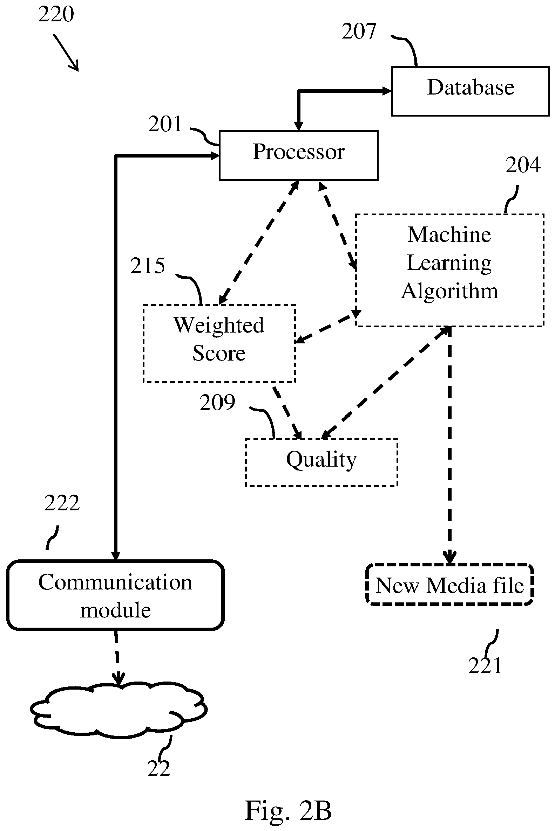

Reference is made to Fig. 2B which shows a block diagram of a system 220 for generation of media files, according to some embodiments of the invention. The direction of arrows in Fig. 2B may indicate the direction of information flow. In some embodiments, software elements in Fig. 2B are indicated with a dashed line while hardware elements are with a solid line. Some elements of the system 220 shown in Fig. 2B may have the same properties as the corresponding elements in system 200 shown in Fig. 2A, such as the processor 201, the database 207 and/or the machine learning algorithm 204.

According to some embodiments, the system 220 may utilize the at least one machine learning algorithm 204 to generate a new media file 221. For instance, the processor 201 may provide a set of initial characteristics to the at least one machine learning algorithm 204 for the generation of the new media file 221. The provided characteristics may include at least one of the extracted feature 202, the identified parameter 203, the calculated score 205, the weighted score 215, the predefined criteria 206, the performance success rate 208 (e.g., a desired rate) and/or any other parameter provided by the user for the new media file 221. For example, an owner of a pizzeria may generate such new media file (e.g., a promotional video) by feeding the at least one machine learning algorithm 204 with keywords such as the name (or logo) of the pizzeria, the target audience, the duration of the desired result, and the desired performance success rate 208.

According to some embodiments, the at least one machine learning algorithm 204 may be trained (e.g., with supervised training) to generate media files based on a set of characteristics provided by the user (e.g., via the processor 201).

In some embodiments, the processor 201 may have access to external sources 22 (e.g., the internet) via a communication module 222 such that media files generated by the system 220 may be published to the external sources 22 (e.g., automatically published on "Facebook").

According to some embodiments, the system 220 may enable users to generate new media files 221 (e.g., videos for marketing and promotional purposes), and publish them to organic and/or paid social channels via the communication module 222. In some embodiments, the processor may display a dedicated dashboard to the user including feedback regarding the media file. The displayed dashboard may include the performance success rate (e.g., based on number of views, likes, comments, clicks, etc.), for example displayed in comparison to other media files created by other users in the same industry (e.g., the fashion industry). The displayed dashboard may also include a value for the calculated quality of the media file (e.g., as calculated by the system 200), for instance to show how optimized the media file is in terms of its creative look. In some embodiments, the system 220 may provide a set of possible actionable instructions to further enhance the quality of the media file, for instance provided by the processor 201 and/or by the machine learning algorithm 204. For example, the machine learning algorithm 204 may analyze a media file and suggest changing at least one characteristic (e.g., change colors or improve the visibility of the logo) in order to improve the calculated quality of the media file.

According to some embodiments, the single system may carry out all operations described for the system 220 shown in Fig. 2B as well as all operations described for system 200 shown in Fig. 2A. In some embodiments, determination of the quality of the media file may be carried out in real time, while the user generates a media file.

In some embodiments, the determined quality of the media file may be a score ranging from 0-100 that is calculated based on a predetermined formula. For example, the predetermined formula may be trained by the machine learning algorithm until effective results are achieved with thousands of generated videos. In some embodiments, the determined quality of the media file may be built from four creative vectors, each with its own weight: readability including a set of factors that define how much the text captions on the videos are readable, style including a set of factors that define how much the video style is consistent with the industry's best practices, branding including a set of factors that determines how much the video promotes the user's brand, and general guidelines including a set of general factors that are required to run a successful digital marketing video campaigns.

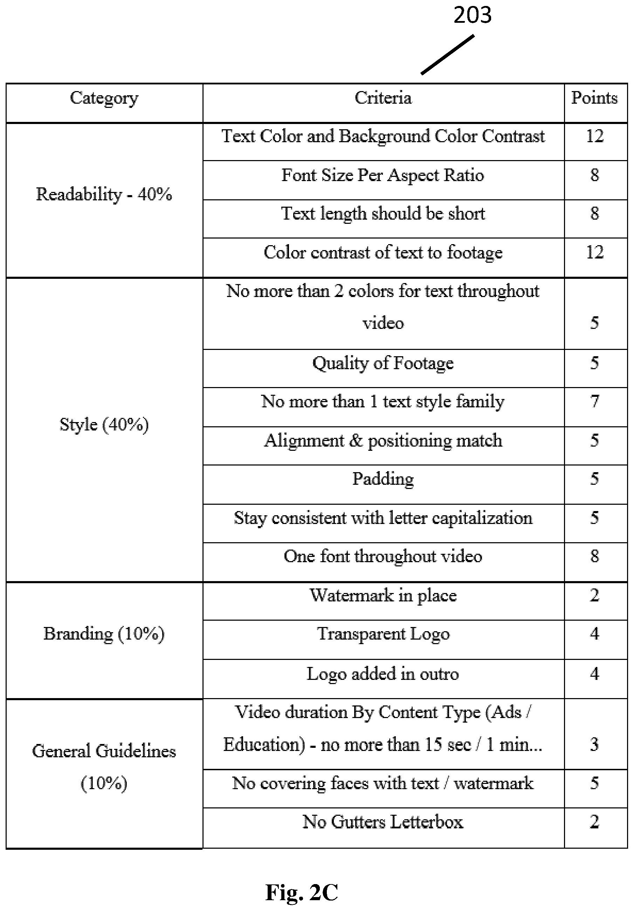

Reference is made to Fig. 2C which shows a table 230. Table 230 may be viewed as a scoring board that lists top or maximal scores for an example of a set of parameters, features and other aspects of a video. For example, with respect to scoring text color and background color contrast (e.g., foreground to background ratio as described), an embodiment may set or give a score of 12 points (top score) if no rule or criterion is breached (e.g., no more than one color is used, same font is used throughout a video etc.). If a rule is breached, e.g., three different font styles are used, then an embodiment may reduce the score of 12, e.g., to 9. Similarly, the top score of 8 for text length may be decreased if text longer than a threshold length is detected in an input media file. Accordingly, a perfect video may score 100 and any other score may be a measure of how good an input video is.

As shown, table 230 shows a suggested set of parameters and/or scores and/or weights for calculation of a quality of a media file, according to some embodiments. For example and as shown in table 230, forty points (or %40 of the possible total of % 100) may be assigned to readability of text in a video, e.g., twelve (12) points may be given if good contrast between text color and background color is identified (and less points may be given to a video if the contrast is not optimal), eight (8) points may be given to font size that matches an aspect ratio, eight (8) points may be given text does not exceed a maximum length and so on. Similarly and as shown by table 230, points may be given to parameters related to style, branding and general guidelines.

It is noted that table 230 is a simplified example of a table or other configuration object that may be used by some embodiments. For example, rules according to which points are decreased or increased may be used in addition to table 230 such that scoring a video may be according to any logic, e.g., a rule may increase or decrease a score based on a combination of parameters or aspects or any logic that can be applied by software.

In some embodiments, a description of a media file (e.g., an input video) may be included in a video descriptive data object that may be a unique data structure that includes all of the parameters, data and metadata required in order to render (display, play or present) the video. Such structure may include styling information, a timeline structure describing the video, layers, creative assets used in the video, animations and so on. In order to determine the quality of the media file, this video descriptive data object may be parsed, for instance broken down to the parameters, features etc., weights may be given to each parameter and/or feature, scores and/or weights may then be used to generate a combined, final quality value for the media file.

As described, in some embodiments, a method for calculating a quality value for a media file may associate various parameters with scores. As further described, a weighted score for the media object may be calculated based on scores associated with parameters and based on weights of the relevant features.

For example, if an identified feature is text (e.g., in caption) then the color and lumen values (parameters) of the text may be sampled by an embodiment, as well as the text background as defined in a video descriptive data object and the embodiment may run a foreground to background ratio calculation. An embodiment may associate a score with parameters such as color, lumen or contrast ratio based on the calculated ratio. For example, a low score may be set if the contrast ratio is less than a first threshold value or greater than a second threshold value, and a high score may be set for, or associated with a parameter, if the contrast ratio is in a specific range.

Font size per aspect ratio may be another parameter some embodiments may evaluate and score. For example, each video aspect ratios (e.g., 16:9, 1:1 and 9:16) may be associated with a different range of optimal font sizes. Accordingly, an embodiment may reduce a score, or set a low score, if a caption in a media file includes a font size outside the associated range, or points may be deducted from an overall score (e.g., a weighted score) of the media file. The video captions font size may be defined in the video descriptive data object.

Text length may be another parameter some embodiments may evaluate and score. For example, a viewer of a video should have enough time to read video captions while visible. A ratio of 9 characters may be defined per displayed second of a caption, where a displayed second is considered as the time period when the caption is fully displayed without any animation or transition. The video captions text, transition times and display times may be included in a video descriptive data object, may be extracted, by an embodiment, therefrom and a score may be associated with parameters such as transition time, number of displayed characters per second and so on based on transition times and display times.

Color contrast of text to footage may be another parameter some embodiments may evaluate and score. Some of the text styles do not use background color. In such case, the color and lumina values of the text and its video background may be sampled by an embodiment. The text color may be defined in the video descriptive data object. For the video background, a single frame per video caption may be extracted by an embodiment to sample the background colors of the area where the video caption is displayed. The video captions displayed area is defined by its x, y, width and height information stored in the video descriptive data object. An embodiment may associate a score with text based on attributes of the text and further based on, or with respect to, attributes of a background.

Color of text may be another parameter some embodiments may evaluate, identify, record and score. For example, an embodiment may score text according to a rule, e.g., a low score may be set if more than a threshold number (e.g., 2) of colors are used in a caption or other text. Footage quality may be another parameter some embodiments may evaluate, identify, record and score.

For example, it may be desirable that the footage (videos and/or photos) will have similar resolution, and frame rates throughout. This is more crucial when the user uses uploaded footage and does not only use footage from predefined videos and photos libraries. For example, an embodiment may associate a video with a low score if the quality (e.g., frame rage, resolution) of at least some of the footage is below a threshold value. An embodiment may lower a score if two portions of a video have different quality, e.g., different resolution or different frame rate.

Text style (e.g., font, color and animations) may be another parameter some embodiments may evaluate, identify, record and score. In some embodiments text styles may be grouped into text style families based on similarity in how they look. For example, a set of text styles that are used for adding text to video that look like quotes may be used, while others have a simple horizontal reveal animation etc. In some embodiments, the text styles in a video may be read as they are defined in the video descriptive data object and an embodiment may verify that they all originate from the same text style family. A score may be associated with a video based on the text styles in the video. For example, a score of a video may be set low if too many and/or incompatible text styles are used.

Alignment and positioning match may be another parameter some embodiments may evaluate, identify, record and score. For example, video captions may be positioned freely on a video. In addition, text may be aligned or indented, e.g., a caption may be placed at the left, right, top, bottom or center. Treating alignment and position as a parameter of text or caption features, an embodiment may associate this parameter with a score based in compliance to criteria, e.g., captions in the left area of a video are aligned left, captions in the the right area of a video are aligned right and so on.

Padding may be another parameter some embodiments may evaluate, identify, record and score. For example, a score may be set based on a threshold of padding (space) between the video borders and captions.

Font or characters consistency may be another parameter some embodiments may evaluate, identify, record and score. For example, a score may be set based on whether or not all video captions use the same letter capitalization throughout the video, e.g., all characters are in uppercase, First character is uppercase and so on. For example, a low score may be set for a video if some of the captions are in uppercase and some only have a first or leading character in uppercase. Similarly, a low score may be set if more than one font type is used.

Watermarks may be features extracted as described and parameters of watermarks, e.g., location on screen, orientation, color and font style may be associated with scores based on rules, e.g., a rule related to watermarks may associate a high score with a watermark placed at the center of the screen and/or with a watermark of a specific color, similarly, a rule may associate a low score with a watermark that is below a threshold size or with a watermark that has a bright color.

Video length may be another parameter some embodiments may evaluate, identify, record and score.

Video duration is a key factor of achieving good video performance. In some embodiments, each video type is associated with an optimal duration. For example, video ads should range between 6 to 15 seconds, while a content marketing video should range between 45 to 75 seconds. Accordingly, the duration parameter of a video may be scored based on the video type, e.g., a low score may be associated with an advertisement video that is 28 seconds long (e.g., since it is longer than 15 seconds).

Coverage of elements by other elements may be another parameter some embodiments may evaluate, identify, record and score. For example, face detection methods may be used to calculate if a caption or watermark is positioned over a face in a video and how much of the face area is covered and for how long. A rule applied to the combination of these factors may be used for calculating a score.

Some embodiments may receive an input video from a user and may automatically improve the input video to thus generate an improved video. For example, a user may create a video and then provide the video as input to an embodiment, the embodiment may automatically create an improved video by modifying and/or improving the input video, and, the embodiment may present and/or provide the improved video to the user. For example, a descriptive data object as described may be created for an input video provided by a user and may be used in the process of automatically improving the input video.

For example, to generate an improved media file based on an input media file (e.g., generate new media file 221 based on media file 20), an embodiment (e.g., system 200) may change text color and/or background color in the input media file. For example, having determined a foreground to background ratio for text and background as described, system 200 may change the color of text and/or background, or change the lumen values such that the text to background foreground to background ratio is improved. In another example, system 200 or 220 may change fonts in an input media file such that one, single font style or type is used throughout the output, improved media file.

In another example, to generate an improved media file based on an input media file (e.g., generate new media file 221 based on media file 20), an embodiment (e.g., system 200) may change font size per aspect ratio in the input media file. For example, each of a set of video aspect ratios (e.g., 16:9, 1:1 and 9:16) may be associated with a set of font sizes that considered as optimal. System 200 may change the a font size in an input media file such that an optimal font size for the aspect ratio of the input media file is set thus improving the input media file.

In another example, to generate an improved media file based on an input media file (e.g., generate new media file 221 based on media file 20), an embodiment (e.g., system 200) may change the duration over which text is displayed in the input media file.

For example, having determined a ratio of displayed characters per second, that is, how long words or captions are presented by the input media file as described, system 200 may automatically change the duration captions are displayed such that their display time is at least greater than a threshold time (e.g., 9 characters per second as described) thus the input media file is improved by improving readability of captions, subtitles and the like.

In another example, to generate an improved media file based on an input media file, system 200 may change text color in the input media file. For example, system 200 may change the color of some of the text in the input media file such that no more than a threshold number colors (e.g., 2 colors) are used throughout the improved video.

In another example, to generate an improved media file based on an input media file, system 200 may automatically change text style in the input media file. For example, having identified two or more text styles in media file 20, in order to create an improved media file, system 200 may change the text style of some of the text in media file 20 such that only one (or other threshold number) of text styles are used in an improved media file.

In another example, to generate an improved media file based on an input media file, system 200 may change alignment or indentation of elements in the input media file. For example, captions in media file 20 that are positioned on the left area of the video may be moved such that they are aligned to the left, and, similarly, other captions may be aligned to the right or they may be centered. Accordingly, an improved media file may include captions that are uniformly aligned or indented.

In another example, to generate an improved media file based on an input media file, system 200 may change insert or remove padding in the input media file. For example, the distance between a captions and a border of a displayed area (video border) may be determined and, by inserting or removing padding, systems 200 or 220 may ensure that, in an improved media file, enough (or threshold) space (padding) is kept between the video borders and captions such that the result is visually appealing. In addition, systems 200 or 220 may change padding in input media file 20 such that same or similar padding is used throughout the video.

In another example, to generate an improved media file based on an input media file, system 200 may change letter capitalization in the input media file, e.g., such that letter capitalization is same or consistent in the improved media file.

For example, system 200 may change letter capitalization such that all captions are in uppercase or such that the first letter in all captions is uppercase and the rest are lowercase. Any other rule may be used to automatically standardize captions, watermarks or any other text in an input file such that text in an output, improved media file conforms to a standard or criterion.

In another example, to generate an improved media file based on an input media file, system 200 may modify watermarks in the input media file. For example, having determined, e.g., using a rule or criterion, watermark is not in an optimal location on scree, system 200 may move or relocate the watermark, or change its color or intensity, such that watermarks in the output, improved media file are optimally placed and seen while not obscuring other elements in an improved video.

In some embodiments, instead of, or in addition to, generating an improved media file based on an input media file, system 200 may examine the input media file and may alert or inform a user of aspects, elements or attributes that need to be changed, in the input file, in order to improve it.

For example, system 200 or 220 may verify that the same or similar resolution, and frame rates are used throughout the input media file. If more than one resolution and/or one frame rate (or any other quality) are used in an input media file, system 200 may alert or inform the user, e.g., using a popup and/or a marker on the video.

In another example, if a logo or other element is provided in a separate file then system 200 may check that the file type is supported (e.g., it is a png file or other known format), if the file type is not supported, an embodiment may alert or inform a user. An embodiment may examine an input media file and warn or alert a user if some elements are missing in the input media file. For example, if system 200 determines that input media file 20 does not include a logo in an intro or outro portion then system 200 may alert the user, e.g., present a popup window with text advising to include a logo in the media file in order to improve it.

In another example, e.g., since video duration is a key factor of achieving good video performance, an embodiment may include definitions (rules or criteria) of optimal durations for different video types. For example, a definition may indicate that video ads should range between 6 to 15 seconds, a content marketing video should range between 45 to 75 seconds and an educational video should not be longer than 20 minutes. Accordingly, an embodiment may determine (or receive) a type of an input video and may alert a user if the duration or length of the input video does not comply with a criterion, e.g., inform the user that the video is too long.

In another example, an embodiment may check whether caption, subtitles, watermarks or other text or graphic element covers or hides faces in the video.

For example, system 200 may use face detection methods in order to determine if a caption, watermark or other text is positioned over a face in a video and, if so, how much of the face area is covered and for how long. As described, a score may be reduced or decreased if caption, watermark or other text covers a face in the video, in addition, an embodiment may alert a user, e.g., advise the user to reposition text.

In some embodiments, an embodiment may determine the aspect ratio of an input media file and warn the user if the aspect ratio is not optimal or does not comply with the aspect ratio of the system that will be publishing a video. For example, black gutters or letterbox effect may occur if an incorrect aspect ratio is used as known in the art, accordingly, an embodiment may inform a user if such effects may occur.

According to some embodiments, the performance success rate may be determined based on aggregated data from various social and/or marketing platforms the media file was published to.

In some embodiments, the user may generate the media file (e.g., a video created in a video editor) using the system 220. At the displayed dashboard the user may select their media file and reach the publish page. Accordingly, the quality of this media file may be calculated (e.g., in real time) for instance by the system 200.

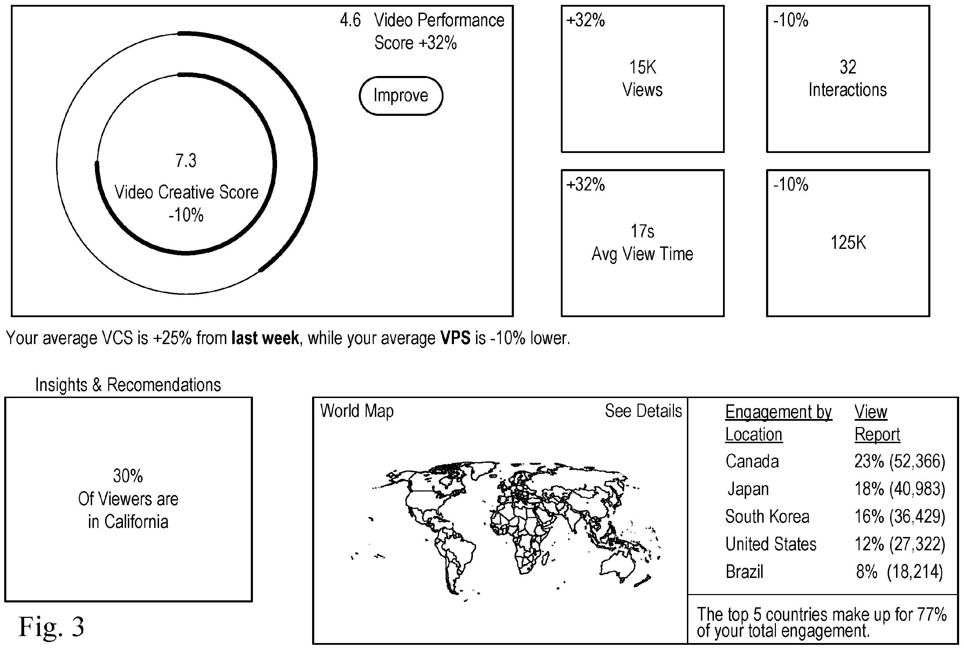

In some embodiments, the user may select which platform to publish the media file on. It may also be any combination of platforms. The publishing backend may upload the media file to the required platforms using each platform API. An aggregation backend may be scheduled to pull performance data from each platform the media file was published on. This may include views, clicks, likes, comments, etc. The data may be aggregated and saved in the database. The user may access the media file analytics dashboard and the media file performance data may be retrieved from the database and displayed to the user in a form of graphs and/or analytics counters widgets (for example as shown in Fig. 3).

In some embodiments, a creative insights AI model may read the all media file performance data and combine it with a set of parameters extracted media file descriptive data object to generate insights like "Square videos work best on Instagram" or "Use text style #1 when publishing on Facebook". Performance parameters that the AI model may input are: views, likes, comments, and clicks.

In some embodiments, a quality score may be given to the performance (may be a simple sum of the above or a weighted sum). The higher the score the better the media file performance is tagged for the AI model. The model may then cluster version parameters from the media file descriptive data object in addition to publishing data (such as time of publish, publish platform, the user business type etc.) to find correlations between high performing media file and creative insights. Examples of creative parameters that can be used as input for the model may be: video ratio, text colors, font size, text styles, text positioning, and footage tags.

Possible AI algorithms that may be used alone or in combination to generate the above model are: "K-Means Clustering", "Mean-Shift Clustering", and "random forests". The creative insights may be displayed for the user as part of the dashboard enabling to take relevant action when creating his next media file or even improve the current media file (for example publish the same media file in a different ratio).

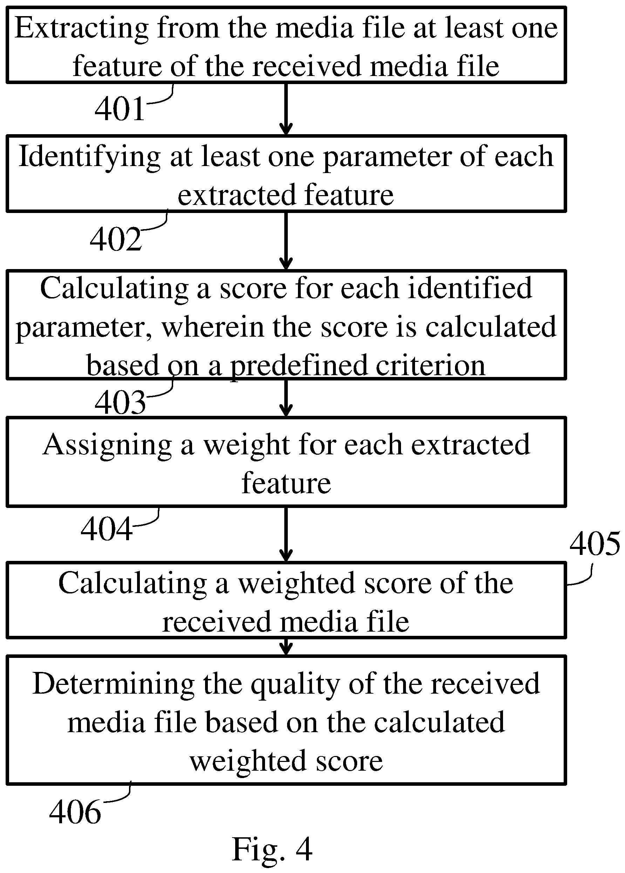

Reference is made to Fig. 4 which shows a flowchart of a method of assessing the quality of a received media file, according to some embodiments of the invention. In some embodiments, at least one feature of the received media file may be extracted, for instance by the processor (in Step 401). At least one parameter of each extracted feature may be identified , for instance by the processor (in Step 402).

A score for each identified parameter may be calculated, where the score may be calculated based on a predefined criterion, for instance by the processor (in Step 403). A weight for each extracted feature may be assigned, for instance by the processor (in Step 404). A weighted score of the received media file may be calculated, for instance by the processor (in Step 405), and the quality of the received media file may be determined based on the calculated weighted score, for instance by the processor (in Step 406). In some embodiments, the assigned weights of each extracted feature of the received media file may be associated with a performance success rate of published media files.

The following clauses also form part of the disclosure.
1. A method of assessing quality of a received media file, the method comprising:
   extracting, by a processor, from the media file at least one feature of the received media file;
   identifying, by a processor, at least one parameter of each extracted feature;
   calculating, by the processor, a score for each identified parameter, wherein the score is calculated based on a predefined criterion;
   assigning, by the processor, a weight for each extracted feature;
   calculating, by the processor, a weighted score of the received media file; and
   determining, by the processor, the quality of the received media file based on the calculated weighted score,
   wherein the assigned weights of each extracted feature of the received media file are associated with a performance success rate of published media files.
2. The method of clause 1, further comprising:
   publishing, by the processor, the received media file;
   aggregating, by the processor, the number of interactions with the published media file; and
   determining, by the processor, the performance success rate.
3. The method of clause 1 or 2, further comprising training a machine learning algorithm to determine changes in the received media file in order to increase the performance success rate.
4. The method of clause 1 or 2, further comprising training a machine learning algorithm to determine the quality of the received media file.
5. The method of clause 1, wherein the determination is carried out in real time.
6. The method of clause 1, wherein the determination is based on at least one of readability and design of the received media file.
7. The method of clause 6, wherein the determination is based on at least one of: text color, number of different text colors, number of text styles, color contrast, font size, length of text, alignment of text, visibility of objects, transparency of predefined text, and time duration of the media file.
8. The method of clause 1, further comprising parsing, by the processor, the received media file to identify the at least one parameter.
9. A system for quality assessment of a received media file, the system comprising:
   a database comprising a value for a performance success rate and at least one predefined criterion; and
   a processor, coupled to the database, and configured to:
      extract from the received media file at least one feature of the received media file;
      identify at least one parameter of each extracted feature;
      calculate a score for each identified parameter, wherein the score is calculated based on the predefined criterion;
      assign a weight for each extracted feature;
      calculate a weighted score of the received media file; and
      determine the quality of the received media file based on the calculated weighted score,
   wherein the assigned weights of each extracted feature of the received media file are associated with the performance success rate of published media files.
10. The system of clause 9, wherein the processor is further configured to:
   publish the received media file;
   aggregate the number of interactions with the published media file; and
   determine the performance success rate.
11. The system of clause 9, wherein the processor is further configured to train a machine learning algorithm to determine changes in the received media file in order to increase the performance success rate.
12. The system of clause 9, wherein the processor is further configured to train a machine learning algorithm to determine the quality of the received media file.
13. The system of clause 9, wherein the determination is carried out in real time.
14. The system of clause 9, wherein the determination is based on at least one of readability and design of the received media file.
15. The system of clause 14, wherein the determination is based on at least one of: text color, number of different text colors, number of text styles, color contrast, font size, length of text, alignment of text, visibility of objects, transparency of predefined text, and time duration of the media file.
16. The system of clause 9, wherein the processor is further configured to parse the received media file to identify the at least one parameter.

Unless explicitly stated, the method embodiments described herein are not constrained to a particular order in time or chronological sequence. Additionally, some of the described method elements may be skipped, or they may be repeated, during a sequence of operations of a method.

Various embodiments have been presented. Each of these embodiments may of course include features from other embodiments presented, and embodiments not specifically described may include various features described herein.

## Claims

1. A method of assessing quality of a received media file, the method comprising:
extracting, by a processor, from the media file at least one feature of the received media file;
identifying, by a processor, at least one parameter of each extracted feature;
calculating, by the processor, a score for each identified parameter, wherein the score is calculated based on a predefined criterion;
assigning, by the processor, a weight for each extracted feature;
calculating, by the processor, a weighted score of the received media file; and
determining, by the processor, the quality of the received media file based on the calculated weighted score.

2. The method of claim 1, further comprising:
publishing, by the processor, the received media file;
aggregating, by the processor, the number of interactions with the published media file; and
determining, by the processor, a performance success rate for the published media.

3. The method of claim 1 or 2, further comprising: training a machine learning algorithm to determine changes in the received media file in order to increase the performance success rate.

4. The method of claim 1 or 2, further comprising: training a machine learning algorithm to determine the quality of the received media file.

5. The method of claim 1, wherein the determination is carried out in real time.

6. The method of claim 1, wherein the determination is based on at least one of readability and design of the received media file.

7. The method of claim 6, wherein the determination is based on at least one of: text color, number of different text colors, number of text styles, color contrast, font size, length of text, alignment of text, visibility of objects, transparency of predefined text, and time duration of the media file.

8. The method of claim 1, further comprising: parsing, by the processor, the received media file to identify the at least one parameter.

9. A system including a computer readable medium comprising instructions which, when implemented in one or more processors in a computing system, cause the processor to perform the steps of the method of any preceding claim.

10. The system of claim 9, wherein the processor is configured to:
extract from the received media file at least one feature of the received media file;
identify at least one parameter of each extracted feature;
calculate a score for each identified parameter, wherein the score is calculated based on the predefined criterion;
assign a weight for each extracted feature;
calculate a weighted score of the received media file; and
determine the quality of the received media file based on the calculated weighted score.

11. The system of claim 10, wherein the processor is further configured to:
publish the received media file;
aggregate the number of interactions with the published media file; and
determine a performance a success rate for the published media file.

12. The system of claim 10, wherein the processor is further configured to train a machine learning algorithm to determine changes in the received media file in order to increase a performance success rate of the received media.

13. The system of claim 10, wherein the processor is further configured to train a machine learning algorithm to determine the quality of the received media file.

14. The system of claim 10, wherein the determination is based on at least one of readability and design of the received media file.

15. The system of claim 14, wherein the determination is based on at least one of: text color, number of different text colors, number of text styles, color contrast, font size, length of text, alignment of text, visibility of objects, transparency of predefined text, and time duration of the media file.
